# EUROPEAN PATENT SPECIFICATION

(11) **EP 0 998 098 B1**
(45) Date of publication and mention of the grant of the patent: **14.06.2006**
(21) Application number: 99308217.1
(22) Date of filing: 18.10.1999
(51) Int. Cl.: H04L 29/06, H04L 12/28, H04L 29/12

(54) **Method of establishing and maintaining a mobile TCP connection**
Verfahren zur Herstellung und Aufrechterhaltung einer mobilen TCP-Verbindung
Procédé pour établir et maintenir une connection mobile TCP

(30) Priority: 28.10.1998 US 179969
(43) Date of publication of application: 03.05.2000
(73) Proprietor: LUCENT TECHNOLOGIES INC., Murray Hill, New Jersey 07974-0636 (US)
(72) Inventor: Orsic, Milo, Lincolnwood, IL 35161 (US)
(74) Representative: Sarup, David Alexander

(56) References cited:
- HAAS Z J ET AL: "Mobile-TCP: an asymmetric transport protocol design for mobile systems" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8 June 1997 (1997-06-08), pages 1054-1058, XP010227263 ISBN: 0-7803-3925-8
- MALTZ D A ET AL: "MSOCKS: an architecture for transport layer mobility" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, 29 March 1998 (1998-03-29), pages 1037-1045, XP010270326 ISBN: 0-7803-4383-2
- KUANG-YEH WANG ET AL: "Mobile-end transport protocol: an alternative to TCP/IP over wireless links" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, 29 March 1998 (1998-03-29), pages 1046-1053, XP010270379 ISBN: 0-7803-4383-2
- AJAY BAKRE ET AL: "I-TCP: INDIRECT TCP FOR MOBILE HOSTS" PROCEEDINGS OF THE INTERNATIONAL CONFERENCE ON DISTRIBUTED COMPUTING SYSTEMS. VANCOUVER, MAY 30 - JUNE 2, 1995, LOS ALAMITOS, IEEE COMP. SOC. PRESS, US, vol. CONF. 15, 30 May 1995 (1995-05-30), pages 136-143, XP000530804 ISBN: 0-7803-2963-5
- BROWN K ET AL: "A network architecture for mobile computing" PROCEEDINGS OF IEEE INFOCOM 1996. CONFERENCE ON COMPUTER COMMUNICATIONS. FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996, PROCEEDINGS OF INFOCOM, L, vol. 2 CONF. 15, 24 March 1996 (1996-03-24), pages 1388-1396, XP010158213 ISBN: 0-8186-7293-5

## Description

### BACKGROUND OF THE INVENTION

### Field of the Invention

The present invention relates to a mobile-TCP (m-TCP) and a method of establishing and maintaining an m-TCP connection between mobile terminals/hosts, e.g., computers, via the Internet or the like.

### Description of Related Art

A TCP/IP (transmission control protocol/internet protocol) suite includes protocols that control communication between computers via the Internet. These protocols include a TCP, an IP, and a user datagram protocol (UDP). The TCP is a connection oriented service and the UDP is a connectionless service.

Conventionally, the TCP requires fixed IP endpoint addresses to establish a TCP connection between terminals/hosts (T/Hs). These IP endpoint addresses cannot be changed once the TCP connection has been established. That is, a TCP connection between two entities (e.g., T/Hs) is uniquely identified by a pair of endpoints. Each of the endpoints includes a two-tuple composed of an IP address of the host and a particular TCP port number within the host. These IP addresses and the TCP port numbers are fixed and unchangeable once the TCP connection has been established. However, for mobile T/Hs that roam through the network, such as the Internet, the endpoints constantly change. Therefore, conventional TCP services are inadequate for establishing and maintaining communication between mobile T/Hs.

Haas Z J *et al:* "Mobile-TCP: an asymmetric transport protocol design for mobile systems" Communications, 1997. ICC '97 Montreal, Towards the Knowledge Millennium. 1997 IEEE International Conference Montreal, Que., Canada 8-12 June 1997, New York, NY, USA, IEEE, US, 8 June 1997 (1997-06-08), pages 1054-1058, discloses creating a system in which a mobile gateway proxy is inserted between a mobile entity and a fixed entity. A connection ID and reverse connection ID are provided in a TCP header. When the mobile is transmitting, the connection ID is the connection ID of the mobile, and the reverse connection ID is the connection ID of the mobile gateway. Furthermore, the destination port and destination IP address provided in the TCP packet header includes the destination port and IP address of the destination entity; namely, the fixed entity.

Maltz D A *et al:* "MSOCKS: an architecture for transport layer mobility" INFOCOM '98. Seventeenth Annual Joint Conference of the IEEE Computer and Communications Societies. Proceedings, IEEE San Francisco, CA, USA 29 March-2 April 1998, New York, NY, USA, IEEE, US, 29 March 1998 (1998-03-29), pages 1037-1045, also discloses the insertion of a proxy between a mobile client and a server. The proxy decides on a connection identifier to use in communication sessions between the mobile and the proxy. Instead of providing a connection identification for the first communication entity and a connection identifier for the second communication entity, a single connection identifier assigned by the proxy only is provided.

Kuang-Yeh Wang *et al:* "Mobile-end transport protocol: an alternative to TCP/IP over wireless links" INFOCOM '98. Seventeenth Annual Joint Conference of the IEEE Computer and Communications Societies, Proceedings, IEEE San Francisco, CA, USA 29 March-2 April 1998, New York, NY, USA, IEEE, US, 29 March 1998 (1998-03-29), pages 1046-1053, discloses adding a connection identifier to the TCP header in communication between a mobile and a base station. The connection ID is assigned solely by the base station.

### Summary of the Invention

Communication methods and computer programs according to the invention are as set out in the independent claims. Preferred forms are set out in the dependent claims.

### BRIEF DESCRIPTION OF THE DRAWINGS

The present invention will become more fully understood from the detailed description given hereinbelow and the accompanying drawings which are given by way of illustration only, wherein reference numerals designate corresponding parts in the various drawings and wherein:
Fig. 1 shows a diagram of a communication system operating via the Internet according to an embodiment of the present invention;
Fig. 2 shows a structure of a cell in the communication system of Fig. 1; and
Fig. 3 shows an internal data structure of a TCP header according to the present invention.

### DETAILED DESCRIPTION OF THE PREFERRED EMBODIMENTS

The following detailed description relates to an m-TCP and a method of establishing and maintaining an m-TCP connection according to the embodiments of the present invention. The m-TCP allows transmission of datagrams between mobile T/Hs (e.g., computers) virtually connected to each other via the Internet. A datagram is composed of a data segment and an IP header.

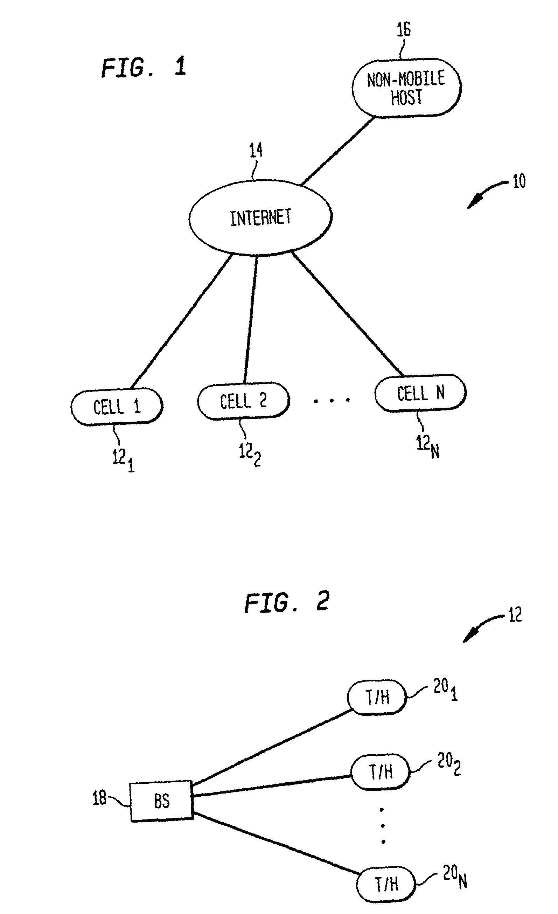

Fig. 1 shows a general diagram of a communication system operating via the Internet according to the present invention. As shown therein, the communication system 10 includes a plurality of cells 12₁, 12₂...12_{N} and a non-mobile host 16, communicating via the Internet 14. These cells 12₁, 12₂...12_{N} define a wireless access sub-network, i.e., an m-TCP/IP suite.

Each of the cells 12₁, 12₂...12_{N} (cell 12) includes one Base Station (BS) 18 and a plurality of mobile T/Hs 20₁, 20₂...20_{N}, as shown in Fig. 2. The BS 18 provides radio access to and from the plurality of mobile T/Hs 20₁, 20₂...20_{N} and functions as a router for directing IP traffic between the mobile T/Hs 20₁, 20₂...20_{N} via the Internet 14. The IP traffic in the downstream direction (i.e., from the BS 18 to the T/H) is broadcasted by the BS 18, while in the upstream direction (i.e., from the T/H to the BS 18) the IF traffic is transmitted through a statistically shared upstream radio channel. Each of the mobile T/Hs 20₁, 20₂...20_{N} (mobile T/H 20) can communicate with at least two BSs, simultaneously.

Each cell 12 has its own IP address, e.g., NETID, to identify the cell, and a plurality of virtual access ports to which different mobile T/Hs 20₁, 20₂...20_{N} are attached to communicate with each other via the Internet 14 under control of the BS 18. To identify these access ports, each access port has a host IP address, e.g., HOSTID.

Each mobile T/H 20 has a permanent domain name for identifying the T/H. The domain name is stored in a non-volatile memory of the respective T/H. Further, each mobile T/H 20 has a domain name server (DNS) for registering therein the domain name of the mobile T/H under a new class of domain names, e.g., Mobile Internet Class (MIC). The DNS of each mobile T/H 20 also stores and updates the IP address of the mobile T/H 20, which represents the current address of the mobile T/H 20. As the mobile T/H 20 roams across the network (e.g., the Internet 14) by, e.g., attaching itself to a new BS, the mobile T/H 20 acquires a new IP address. The DNS of the mobile T/H 20 updates the IP address of the T/H 20 with the newly obtained IP address. If the mobile T/H 20 disconnects itself completely from the network, the DNS does not store any IP address for the mobile T/H 20.

The new IP addresses are assigned by an m-DHCP (Dynamic Host Control Protocol) server as the T/Hs 20₁, 20₂...20_{N} roam through the network, constantly changing their IP addresses. Each BS 18 can incorporate therein an m-DHCP server or its functions. If the BS 18 incorporates the m-DHCP server, a number of IP addresses allocated to each BS 18 is greater than the maximum number of mobile T/Hs 20₁, 20₂...20_{N} that are presently attached to the corresponding cell. Whenever an IP address that is no longer in use is returned to the collection of IP addresses in the m-DHCP server, the returned IP address is temporarily unavailable for a predetermined time period to avoid interferences between previous and current connections. The predetermined time period is typically greater than the maximum time an old segment can remain alive in the Internet 14, and this provides sufficient time to update the corresponding DNS.

The assignment of new IP addresses to the mobile T/Hs 20₁, 20₂...20_{N} is initiated by a request signal sent from the mobile T/H 20. The mobile T/H 20, seeking a new IP address, generates an m-DHCP request signal to the m-DHCP server. The m-DHCP request signal from the mobile T/H 20 contains the T/H 20's domain name for identifying the mobile T/H 20 and the unique hardware address (e.g., MAC address) of the mobile T/H 20. In response to the m-DHCP request signal, the m-DHCP server informs the mobile T/H 20 of the following: the new IP address that has been leased to the mobile T/H 20, the duration of the lease, the IP address of the BS, and the IP address of the DNS that provides name resolution services for the cell (sub-network) having the BS. The mobile T/H 20 has to renew the lease periodically while it is attached to a particular virtual access port of the cell to avoid the expiration of the lease. The lease can be terminated at any time by the mobile T/H 20. If the lease were to expire, the mobile T/H 20 loses its IP address. The m-DHCP server informs the corresponding DNS of the lease cancellation, lease expiration, or the allocation of an IP address to the mobile T/H 20.

The operation of an m-TCP connection according to the present invention is described below. Here, the Client is a stationary or mobile T/H that wishes to initiate an m-TCP connection with its m-TCP peer, and the Server (the m-TCP peer) is a stationary or mobile T/H that wishes to accept the m-TCP connection request from the client.

The operation of an m-TCP connection can be classified into three phases. The first phase is a connection phase where an m-TCP connection between two communication entities, e.g., a mobile T/H and a host (e.g., stationary or mobile T/H) is made; the second phase is an exchange phase where data segments are exchanged between the connected communicating m-TCP entities; and the third phase is a closing phase where the established m-TCP connection is terminated.

In the connection phase, a mobile T/H 20 (Server), that is willing to accept an m-TCP connection, executes a passive open function in its application program to indicate to its m-TCP layer that it is willing to accept an m-TCP connection on a specified m-TCP port number. A host (Client), that wishes to establish an m-TCP connection with its m-TCP peer, then obtains the current IP address of the mobile T/H 20 from the DNS of the mobile T/H 20, and executes an active open function to specify the destination endpoint of the connection (i.e., the IP address of the mobile T/H 20 and its m-TCP port number). The active and passive open functions are known in the art. The m-TCP program on the host side creates and transmits a connection request signal to the mobile T/H 20 using the obtained current IP address of the mobile T/H 20.

If the IP address of the mobile T/H 20 has been changed during this process, a soft switch-over mechanism ensures that the host's connection request signal reaches the mobile T/H 20. The soft switch-over mechanism allows the mobile T/H 20 to retain the old IP address after it has acquired the new IP address. Hence, the mobile T/H 20 is able to receive the datagrams that have been delayed in the network on the old IP address. After a set time period, the old IP address is relinquished.

If the old IP address of the mobile T/H 20 has been relinquished on the mobile T/H 20 side before the connection request has reached the mobile T/H 20, then the current attempt by the host to connect to the mobile T/H 20 fails. In this case, the connection process must be repeated to establish the m-TCP connection. To do so, the TCP program on the host side will access the DNS of the mobile T/H 20 again to obtain a new IP address of the mobile T/H 20.

On the other hand, the mobile T/H 20 (now Client) may wish to establish an m-TCP connection with the host (now Server). In this case, the application program in the host that wishes to accept an m-TCP connection, executes a standard passive open function, indicating that it is willing to accept an m-TCP connection on a specified m-TCP port number. The application program in the mobile T/H 20 then executes an active open function and specifies the destination endpoint of the connection (i.e., the IP address of the host and its m-TCP port number) as discussed above to establish the m-TCP connection.

To establish the m-TCP connection, the m-TCP utilizes a three-way handshake known in the conventional TCP. In addition to exchanging the standard TCP parameters, two additional parameters during the setup of the m-TCP connection will be exchanged according to the present invention. The two parameters, which must be globally unique, are a local connection identification (local_conId) and a remote connection identification (remote_conId). These parameters form a connection identification (conID) for uniquely identifying the m-TCP connection (i.e., conID = local_conld, remote_conId), and are included in every data segment communicated between the m-TCP entities even after the IP addresses change. By including the conID in every data segment with the new IP addresses, the m-TCP entity receiving the conID with the new IP address determines the m-TCP connection based on the conID, and delivers the datagrams appropriately, e.g., to a socket, a service access point, or the like.

The two parameters in the conID are chosen during the first phase of the m-TCP connection, and uniquely identify the m-TCP connection. Each side of the m-TCP connection selects a local_conId for identifying itself to the other side, so that the local_conId of one side becomes the remote_conId of the other side. These parameters can be numbers randomly chosen from each side, such that the conID can be a combination of these number, e.g., 27009876.

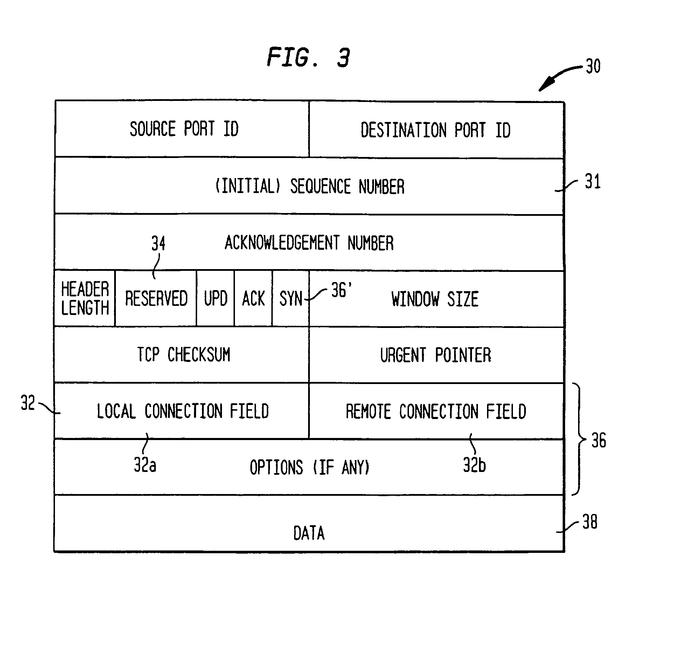

The conID is included in the m-TCP header of each m-TCP data segment. Fig. 3 shows an example of an m-TCP header structure according to the present invention. As shown therein, the m-TCP header 30 includes a source port ID field, a destination port ID field, an initial or incremented sequence number stored in a sequence number field 31, an acknowledgement number field, a reserved area 34, a TCP checksum field, and an information data field 38 according to a known TCP header. These fields are processed according to a conventional TCP three-way handshake. In addition, the m-TCP header 30 according to the present invention includes a global ID field 32 divided into a local connection field 32a and a remote connection field 32b. The global ID field 32 is located in a field 36 for options. Each of the fields 32a and 32b may be predeterminedly long, e.g., two octets. The local connection field 32a stores the local_conId therein, and the remote connection field 32b stores the remote_conId therein.

More specifically in the three-way handshaking process, if a first entity (e.g., first mobile T/H 20₁) wishes to establish an m-TCP connection with a second entity (e.g., second mobile T/H 20₂), the first entity creates a first segment signal for requesting a setup of an m-TCP connection. The first segment signal includes a SYN bit (SYN = 1) set in a code field 36' of the m-TCP header 30, and a local_conId value set in the local connection field 32a of the m-TCP header 30. At this time, the remote connection field 32b is left blank. Upon receipt of the first segment signal, the second entity generates a second segment signal for acknowledging the receipt of the first segment signal. The second segment signal includes SYN and ACK bits (SYN=1, ACK=1) set in the code field 36' of its own m-TCP header, and the selected local_conId value set in its local connection field. In the remote connection field of the m-TCP header of the second entity, the content of the local connection field 32a of the received first segment signal is copied and stored. Upon receipt of the second segment signal; the first entity generates a third segment for acknowledging the receipt of the second segment signal, and informs the second entity that the m-TCP connection has been successfully established.

The operation of the m-TCP connection in the second phase, once the m-TCP connection has been established, is similar to the operation of a conventional TCP in the second phase, except for certain modifications as discussed below.

In the m-TCP of the present invention, the conventional TCP is modified to store the constantly changing end points (IP address and TCP port number) of the m-TCP connection since the mobile T/Hs 20 change their connection end points constantly as they roam across the network. The m-TCP uses conIDs to route the incoming segments appropriately, e.g., to a socket, a service access point, or the like, based on the conIDs. For the outgoing segments, the m-TCP transmits the data segments based on the current IP addresses. Furthermore, the m-TCP saves the conID, the initial end point information for both ends, and the current endpoint information for both ends. This information can be available to other application programs.

The remote endpoint information (i.e., remote IP address and port number) is obtained from the arriving data segment since each arriving data segment contains the conID and the present source IP address, where the source IP address is part of the endpoint information of the entity on the other side of the m-TCP connection. If the data segments are out of sequence, the sequence number that is also contained in the field 31 of the m-TCP header is used to determine which data segment is the most recent one and provides the most recent source IP address.

Whenever a mobile T/H obtains a new IP address and there are no outgoing data segments to be sent with the new IP address, the m-TCP sends a dummy segment DS to its m-TCP peer to inform its peer of the new IP address. Furthermore, during the life of an m-TCP connection, the m-TCP continuously sends DSs (dummy segments with no information data) to its m-TCP peer at regular time intervals.

Receipt of each DS is acknowledged by the receiving m-TCP with a dummy segment acknowledgment segment (DS ACK). The m-TCP marks the data segment being transmitted as the DS or the DS ACK using one of the reserved bits (e.g., UPD bit in the header 30) existing in the m-TCP header. For example, the UPD bit can be set to one if the current data segment is a DS, and both the UPD and ACK bits can be set to one if the current data segment is a DS ACK. If the transmitted DS is not acknowledged by the receiving m-TCP, it is retransmitted until the acknowledgment is received.

Each DS includes a unique sequence number for identifying the particular DS. This sequence number is stored in the sequence number field 31 of the m-TCP header, and is independently incremented. The sequence number incrementation process of the DSs is different from the sequence number incrementation process for segments with information data, because DSs do not carry information data and the incrementation for the segments with information data is performed based on the size of the information data. The sequence number incrementation for the DSs begins with an initial sequence number (e.g., 1) and increases the sequence number by a preset value (e.g., 1). The sender of a new DS increments the previous sequence number and includes the newly incremented sequence number in the new DS, so that each DS includes a new sequence number. The receiver of the DSs checks the sequence numbers and processes the most current sequence numbered DS while ignoring the old sequence numbered DSs in case of network delays, etc. The receiver of the DS sends a DS ACK to the sender, which includes the received sequence number.

The DS and DS ACK are not subjected to buffering or flow control. The DS and DS ACK are continuously exchanged at a regular time interval until the m-TCP connection is completely closed. That is, they are exchanged in both directions until the m-TCP connection is closed in both directions.

After the datagrams have been exchanged between the connected m-TCP entities, the connection may be terminated. The last termination phase of the m-TCP is performed in the same way as the termination phase of conventional TCP connection procedures.

Accordingly, an m-TCP and a method of establishing and maintaining an m-TCP connection according to the present invention allow mobile T/Hs to communicate with each other via the Internet using minimum variables.

## Claims

1. A communication method of a first communication entity for establishing a mobile TCP, transmission control protocol, connection between the first communication entity and a second communication entity, comprising the steps of:
transmitting a first segment signal to the second communication entity, the first segment signal including a port identifier of the first communication entity, a port identifier of the second communication entity, and a connection identification of the first communication entity that remains unchanged for the duration of said mobile TCP connection, in case said first communication entity roams across the network or a new network address is assigned to the first communication entity;
receiving a second segment signal from the second communication entity in response to the first segment signal, the second segment signal including the port identifier of the second communication entity, the port identifier of the first communication entity, a connection identification of the second communication entity and the connection identification of the first communication entity, said connection identification of the second communication entity remains unchanged for the duration of said mobile TCP connection in case said second communication entity roams across the network or a new network address is assigned to the second communication entity, the connection identifications of the first and second communication entities forming a mobile TCP connection identification for the first and second communication entities; and
transmitting a third segment signal to the second communication entity in response to the second segment signal.

2. The communication method of claim 1, wherein in the receiving step, the second segment signal further includes acknowledgement data for acknowledging receipt of the first segment signal by the second communication entity.

3. The communication method of claim 1, wherein in the step of transmitting a third segment signal, the third segment signal includes acknowledgement data for acknowledging receipt of the second segment signal by the first communication entity.

4. The communication method of claim 1, wherein in the step of transmitting a first segment signal, at least one of the first and second communication entities is a mobile terminal having a changing IP address:

5. A communication method of a second communication entity for establishing a mobile TCP, transmission control protocol, connection between a first communication entity and the second communication entity, comprising the steps of:
receiving a first segment signal from the first communication entity, the first segment signal including a port identifier of the first communication entity, a port identifier of the second communication entity and a connection identification of the first communication entity that remains unchanged for the duration of said mobile TCP connection, in case said first communication entity roams across the network or a new network address is assigned to the first communication entity; and
transmitting a second segment signal to the first communication entity in response to the first segment signal, the second segment signal including the port identifier of the second communication entity, the port identifier of the first communication entity, a connection identification of the second communication entity and the connection identification of the first communication entity, said connection identification of the second communication entity remains unchanged for the duration of said mobile TCP connection, in case said second communication entity roams across the network or a new network address is assigned to the second communications entity, the connection identifications of the first and second communication entities forming a mobile TCP connection identification for the first and second communication entities.

6. The communication method of claim 5, wherein in the transmitting step, the second segment signal further includes acknowledgement data for acknowledging receipt of the first segment signal by the second communication entity.

7. The communication method of claim 5, further comprising the step of:
receiving a third segment signal from the first communication entity for acknowledging receipt of the second segment signal by the first communication entity.

8. The communication method of claim 5, wherein in the receiving and transmitting steps, at least one of the first and second communication entities is a mobile terminal having a changing IP address.

9. A computer program stored on a computer-readable medium of a first communication entity for establishing a mobile-TCP, transmission control protocol, connection between the first communication entity and a second communication entity, the computer program containing instructions which upon execution carry out the method steps of claim 1.

10. The computer program of claim 9, wherein the third segment signal includes acknowledgment data for acknowledging receipt of the second segment signal by the first communication entity.

11. A computer program stored on a computer-readable medium of a first communication entity for establishing a mobile-TCP, transmission control protocol, connection between the first communication entity and a second communication entity, the computer program containing instructions which upon execution carry out the method steps of claim 5.

12. The computer program of claim 11, wherein the instructions, upon execution, further carry out the steps of:
receiving and verifying a third segment signal generated from the first communication entity in response to the second segment signal.

## Patentansprüche

1. Kommunikationsverfahren einer ersten Kommunikationsentität zum Herstellen einer Verbindung des mobilen Übertragungssteuerprotokolls TCP zwischen der ersten Kommunikationsentität und einer zweiten Kommunikationsentität, mit den folgenden Schritten:
Senden eines ersten Segmentsignals zu der zweiten Kommunikationsentität, wobei das erste Segmentsignal eine Portkennung der ersten Kommunikationsentität, eine Portkennung der zweiten Kommunikationsentität und eine Verbindungsidentifikation der ersten Kommunikationsentität enthält, die für die Dauer der Mobil-TCP-Verbindung unverändert bleibt, falls die erste Kommunikationsentität über das Netzwerk hinweg roamt oder der ersten Kommunikationsentität eine neue Netzwerkadresse zugewiesen wird;
Empfangen eines zweiten Segmentsignals von der zweiten Kommunikationsentität als Reaktion auf das erste Segmentsignal, wobei das zweite Segmentsignal die Portkennung der zweiten Kommunikationsentität, die Portkennung der ersten Kommunikationsentität, eine Verbindungsidentifikation der zweiten Kommunikationsentität und die Verbindungsidentifikation der ersten Kommunikationsentität enthält, wobei die Verbindungsidentifikation der zweiten Kommunikationsentität für die Dauer der Mobil-TCP-Verbindung unverändert bleibt, falls die zweite Kommunikationsentität über das Netzwerk hinweg roamt oder der zweiten Kommunikationsentität eine neue Netzwerkadresse zugewiesen wird, wobei die Verbindungsidentifikationen der ersten und der zweiten Kommunikationsentität eine Mobil-TCP-Verbindungsidentifikation für die erste und die zweite Kommunikationsentität bilden; und
Senden eines dritten Segmentsignals zu der zweiten Kommunikationsentität als Reaktion auf das zweite Segmentsignal.

2. Kommunikationsverfahren nach Anspruch 1, wobei im Empfangsschritt das zweite Segmentsignal ferner Bestätigungsdaten zur Bestätigung des Empfangs des ersten Segmentsignals durch die zweite Kommunikationsentität enthält.

3. Kommunikationsverfahren nach Anspruch 1, wobei im-Schritt des Sendens eines dritten Segmentsignals das dritte Segmentsignal Bestätigungsdaten zum Bestätigen des Empfangs des zweiten Segmentsignals durch die erste Kommunikationsentität enthält.

4. Kommunikationsverfahren nach Anspruch 1, wobei im Schritt des Sendens eines ersten Segmentsignals die erste und/oder die zweite Kommunikationsentität ein mobiles Endgerät mit einer veränderlichen IP-Adresse ist.

5. Kommunikationsverfahren einer zweiten Kommunikationsentität zur Herstellung einer Verbindung des mobilen Übertragungssteuerprotokolls TCP zwischen einer ersten Kommunikationsentität und der zweiten Kommunikationsentität, mit den folgenden Schritten:
Empfangen eines ersten Segmentsignals von der ersten Kommunikationsentität, wobei das erste Segmentsignal eine Portkennung der ersten Kommunikationsentität, eine Portkennung der zweiten Kommunikationsentität und eine Verbindungsidentifikation der ersten Kommunikationsentität enthält, die für die Dauer der Mobil-TCP-Verbindung unverändert bleibt, falls die erste Kommunikationsentität über das Netzwerk hinweg roamt oder der ersten Kommunikationsentität eine neue Netzwerkadresse zugewiesen wird; und
Senden eines zweiten Segmentsignals zu der ersten Kommunikationsentität als Reaktion auf das erste Segmentsignal, wobei das zweite Segmentsignal die Portkennung der zweiten Kommunikationsentität, die Portkennung der ersten Kommunikationsentität, eine Verbindungsidentifikation der zweiten Kommunikationsentität und die Verbindungsidentifikation der ersten Kommunikationsentität enthält, wobei die Verbindungsidentifikation der zweiten Kommunikationsentität für die Dauer der Mobil-TCP-Verbindung unverändert bleibt, falls die zweite Kommunikationsentität über das Netzwerk hinweg roamt oder der zweiten Kommunikationsentität eine neue Netzwerkadresse zugewiesen wird, wobei die Verbindungsidentifikationen der ersten und der zweiten Kommunikationsentität eine Mobil-TCP-Verbindungsidentifikation für die erste und die zweite Kommunikationsentität bilden.

6. Kommunikationsverfahren nach Anspruch 5, wobei im Sendeschritt das zweite Segmentsignal ferner Bestätigungsdaten zum Bestätigen des Empfangs des ersten Segmentsignals durch die zweite Kommunikationsentität enthält.

7. Kommunikationsverfahren nach Anspruch 5, ferner mit dem folgenden Schritt:
Empfangen eines dritten Segmentsignals von der ersten Kommunikationsentität zum Bestätigen des Empfangs des zweiten Segmentsignals durch die erste Kommunikationsentität.

8. Kommunikationsverfahren nach Anspruch 5, wobei in den Schritten des Empfangens und des Sendens die erste und/oder die zweite Kommunikationsentität ein mobiles Endgerät mit einer veränderlichen IP-Adresse ist.

9. Auf einem computerlesbarew Medium einer ersten Kommunikationsentität gespeichertes Computerprogramm zum Herstellen einer Verbindung des mobilen Übertragungssteuerprotokolls TCP zwischen der ersten Kommunikationsentität und einer zweiten Kommunikationsentität, wobei das Computerprogramm Anweisungen enthält, die bei Ausführung die Verfahrensschritte von Anspruch 1 ausführen.

10. Computerprogramm nach Anspruch 9, wobei das dritte Segmentsignal Bestätigungsdaten zum Bestätigen des Empfangs des zweiten Segmentsignals durch die erste Kommunikationsentität enthält.

11. Auf einem computerlesbaren Medium einer ersten Kommunikationsentität gespeichertes Computerprogramm zum Herstellen einer Verbindung des mobilen Übertragungssteuerprotokolls TCP zwischen der ersten Kommunikationsentität und einer zweiten Kommunikationsentität, wobei das Computerprogramm Anweisungen enthält, die bei Ausführung die Verfahrensschritte von Anspruch 5 ausführen.

12. Computerprogramm nach Anspruch 11, wobei die Anweisungen bei Ausführung ferner die folgenden Schritte ausführen:
Empfangen und Verifizieren eines aus der ersten Kommunikationsentität erzeugten dritten Segmentsignals als Reaktion auf das zweite Segmentsignal.

## Revendications

1. Procédé de communication d'une première entité de communication pour établir une connexion TCP, protocole de commande de transmission, mobile entre la première entité de communication et une seconde entité de communication, comprenant les étapes de :
transmission d'un premier signal de segment à la seconde entité de communication, le premier signal de segment comprenant un identifiant de port de la première entité de communication, un identifiant de port de la seconde entité de communication, et une identification de connexion de la première entité de communication qui reste inchangée pendant la durée de ladite connexion TCP mobile, au cas où ladite première entité de communication erre sur le réseau ou une nouvelle adresse réseau est attribuée à la première entité de communication ;
réception d'un deuxième signal de segment provenant de la seconde entité de communication en réponse au premier signal de segment, le deuxième signal de segment comprenant l'identifiant de port de la seconde entité de communication, l'identifiant de port de la première entité de communication, une identification de connexion de la seconde entité de communication et l'identification de connexion de la première entité de communication, ladite identification de connexion de la seconde entité de communication reste inchangée pendant la durée de ladite connexion TCP mobile au cas où ladite seconde entité de communication erre sur le réseau ou une nouvelle adresse réseau est attribuée à la seconde entité de communication, les identifications de connexion des première et seconde entités de communication formant une identification de connexion TCP mobile pour les première et seconde entités de communication ; et
transmission d'un troisième signal de segment à la seconde entité de communication en réponse au deuxième signal de segment.

2. Procédé de communication selon la revendication 1, dans lequel dans l'étape de réception, le deuxième signal de segment comprend en outre des données d'accusé de réception pour accuser réception du premier signal de segment par la seconde entité de communication.

3. Procédé de communication selon la revendication 1, dans lequel dans l'étape de transmission d'un troisième signal de segment, le troisième signal de segment comprend des données d'accusé de réception pour accuser réception du deuxième signal de segment par la première entité de communication.

4. Procédé de communication selon la revendication 1, dans lequel dans l'étape de transmission d'un premier signal de segment, au moins une parmi les première et seconde entités de communication est un terminal mobile ayant une adresse IP changeante.

5. Procédé de communication d'une seconde entité de communication pour établir une connexion TCP, protocole de commande de transmission, mobile entre une première entité de communication et la seconde entité de communication, comprenant les étapes de :
réception d'un premier signal de segment provenant de la première entité de communication, le premier signal de segment comprenant un identifiant de port de la première entité de communication, un identifiant de port de la seconde entité de communication et une identification de connexion de la première entité de communication qui reste inchangée pendant la durée de ladite connexion TCP mobile, au cas où ladite première entité de communication erre sur le réseau ou une nouvelle adresse réseau est attribuée à la première entité de communication ; et
transmission d'un deuxième signal de segment à la première entité de communication en réponse au premier signal de segment, le deuxième signal de segment comprenant l'identifiant de port de la seconde entité de communication, l'identifiant de port de la première entité de communication, une identification de connexion de la seconde entité de communication et l'identification de connexion de la première entité de communication, ladite identification de connexion de la seconde entité de communication reste inchangée pendant la durée de ladite connexion TCP mobile, au cas où ladite seconde entité de communication erre sur le réseau ou une nouvelle adresse réseau est attribuée à la seconde entité de communication, les identifications de connexion des première et seconde entités de communication formant une identification de connexion TCP mobile pour les première et seconde entités de communication.

6. Procédé de communication selon la revendication 5, dans lequel dans l'étape de transmission, le deuxième signal de segment comprend en outre des données d'accusé de réception pour accuser réception du premier signal de segment par la seconde entité de communication.

7. Procédé de communication selon la revendication 5, comprenant en outre l'étape de :
réception d'un troisième signal de segment provenant de la première entité de communication pour accuser réception du deuxième signal de segment par la première entité de communication.

8. Procédé de communication selon la revendication 5, dans lequel dans les étapes de réception et de transmission, au moins une parmi les première et seconde entités de communication est un terminal mobile ayant une adresse IP changeante.

9. Programme informatique stocké sur un support lisible par un ordinateur d'une première entité de communication pour établir une connexion TCP, protocole de commande de transmission, mobile entre la première entité de communication et une seconde entité de communication, le programme informatique contenant des instructions qui dès une exécution réalisent les étapes du procédé de la revendication 1.

10. Programme informatique selon la revendication 9, dans lequel le troisième signal de segment comprend des données d'accusé de réception pour accuser réception du deuxième signal de segment par la première entité de communication.

11. Programme informatique stocké sur un support lisible par un ordinateur d'une première entité de communication pour établir une connexion TCP, protocole de commande de transmission, mobile entre la première entité de communication et une seconde entité de communication, le programme informatique contenant des instructions qui dès une exécution réalisent les étapes du procédé de la revendication 5.

12. Programme informatique selon la revendication 11, dans lequel les instructions, dès une exécution, réalisent en outre les étapes de :
réception et vérification d'une troisième signal de segment généré à partir de la première entité de communication en réponse au deuxième signal de segment.
